# EUROPEAN PATENT APPLICATION

(11) **EP 0 708 247 A1**
(43) Date of publication of application: **24.04.1996**
(21) Application number: 95116274.2
(22) Date of filing: 16.10.1995
(51) Int. Cl.: F04D 13/06, A01K 63/04, F04D 7/04, F04D 15/00

(54) **Centrifugal pump with permanent-magnet motor**

(30) Priority: 18.10.1994 IT PD940181
(71) Applicant: ASKOLL S.p.A., I-36030 Povolaro Dueville (Province of Vicenza) (IT)
(72) Inventor: Marioni, Elio, I-36030 Dueville (Vicenza) (IT)
(74) Representative: Modiano, Guido, Dr.-Ing.

(57) **Abstract**

The centrifugal pump (10) with permanent-magnet motor has a box-like body (11) inside which two hermetically mutually separated chambers are formed. A first one of the chambers accommodates the stator of a permanent-magnet electric motor, and a second one of the chambers accommodates the rotor of the motor. The body furthermore has a third chamber (12) connected to the second chamber and accommodating an impeller (13) that is coaxially connected to the rotor and is connected to the outside by means of an intake duct (15) and a delivery duct. The centrifugal pump (10) furthermore has water oxygenation devices with a first tubular element (18), which is rotatably accommodated in a seat (17) formed in the box-like body (11) and has a first end (20) that can be activated, either directly or via a kinematic transmission, by a user, and a second end (23) that kinematically actuates a first air-passage throttling device. The first tubular element (18) thus forms a first air duct segment that connects the outside of the pump to the delivery duct.

## Description

The present invention relates to a centrifugal pump with permanent-magnet motor, particularly but not exclusively used in aquariums.

Known centrifugal pumps for recirculating water in acquariums are substantially constituted by a box-like body that internally forms two mutually hermetically separated chambers; a first one of said chambers accommodates a stator of the permanent-magnet electric motor, and the second one of said chambers accommodates the rotor of said motor.

The box-like body furthermore contains a third chamber, connected to the second chamber and accommodating an impeller that is connected coaxially to the motor.

It is also known that aquariums, in addition to water recirculation, also require aeration of said water.

Fish in fact require continuous oxygenation in order to survive.

For this purpose, it is necessary to provide devices for aerating the aquarium.

These devices were initially provided independently of the above described centrifugal pump.

In particular, these independent devices are constituted by a box-like container, which contains a lamina made of ferromagnetic material that vibrates in a variable magnetic field formed between two poles of a shaped pack of laminations on which an electric conductor, powered with alternating current, is wound.

Said lamina transmits vibrations, by means of a mechanical connection, to a membrane that constitutes a wall of a chamber provided with air intake and discharge ports with corresponding one-way valves.

The aesthetic factor is highly important in the field of aquarium keeping; accordingly, it is evident that having many devices that are "extraneous" to the environment of the aquarium produces unpleasant aesthetic effects, also in relation to the fact that each one of these devices has its corresponding intake and discharge ducts.

In this regard, centrifugal pumps have been marketed which have a structure fully similar to the one described above and simultaneously perform aeration by means of a small tube that enters the delivery duct and connects said duct to the air.

Although this solution combines the water recirculation device and the aeration device, it has some technical and aesthetic drawbacks.

As regards the technical drawbacks, it should be noted that the air is aspirated by virtue of a Venturi effect, but practical experience has shown that the above described solution does not exploit efficiently this effect and produces sufficient aeration only in highly constrained conditions.

As regards aesthetic drawbacks, in this case, too, there is a small tube that exits from the delivery duct and protrudes into the air from the free surface of the tank; said tube entails a definitely negative aesthetic effect.

A principal aim of the present invention is to provide a centrifugal pump that solves the drawbacks mentioned above in known types, combining the water recirculation and water oxygenation functions by means of a single control for the user.

Another object of the present invention is to provide a centrifugal pump that produces a pleasant aesthetic effect, minimizing the number of tubes inside the aquarium.

Another object of the present invention is to provide a centrifugal pump having competitive costs with respect to known pumps.

Another object of the present invention is to provide a centrifugal pump that can be manufactured with conventional technologies.

Another object of the present invention is to provide a centrifugal pump requiring limited maintenance, which can optionally be performed by the user.

This aim, these objects, and others which will become apparent hereinafter are achieved by a centrifugal pump with permanent-magnet motor, comprising a box-like body inside which two hermetically mutually separated chambers are formed, a first one of said chambers accommodating a stator of a permanent-magnet electric motor, a second one of said chambers accommodating the rotor of said motor, said box-like body having a third chamber connected to the second chamber and accommodating an impeller that is coaxially connected to said rotor and is connected to the outside by means of an intake duct and a delivery duct, said pump being characterized in that it comprises water oxygenation devices constituted by a first tubular element, which is rotatably accommodated in a seat formed in said box-like body and has a first end which is actuatable by a user, and a second end that kinematically actuates first air-passage throttling means, said first tubular element forming a first air duct segment which connects the outside to said delivery duct.

Further characteristics and advantages of the present invention will become apparent from the following detailed description of an embodiment thereof, illustrated only by way of non-limitative example in the accompanying drawings, wherein:
figure 1 is an exploded view of a centrifugal pump according to the invention;
figure 2 is a perspective view of the centrifugal pump according to the invention;
figure 3 is another perspective view of the centrifugal pump according to the invention;
figures 4 and 5 are two top plan views of the centrifugal pump according to the invention, with the lid removed;
figure 6 is a side view of the centrifugal pump according to the invention;
figure 7 is a perspective view of a bracket-like support for the centrifugal pump according to the invention;
figure 8 is a perspective view of the assembly of the bracket-like support and of the centrifugal pump according to the invention.

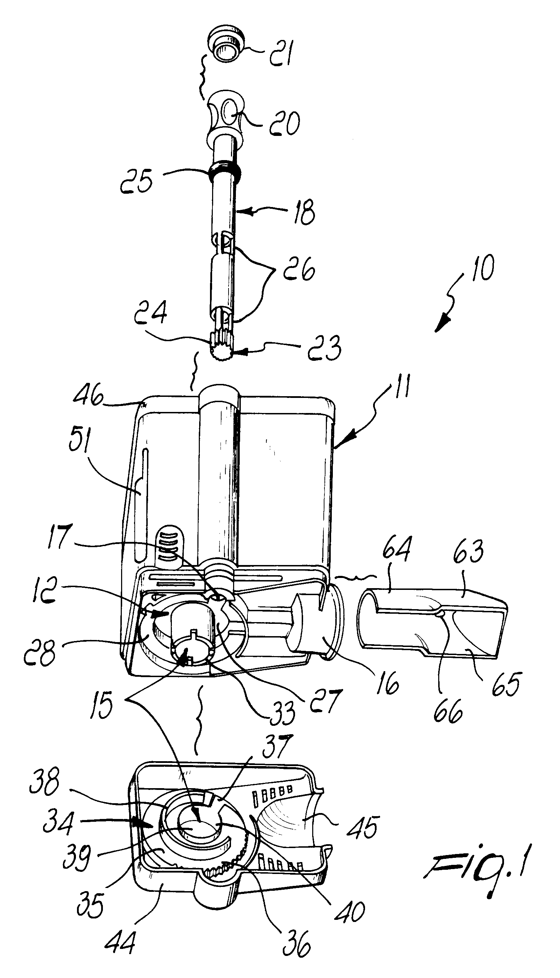

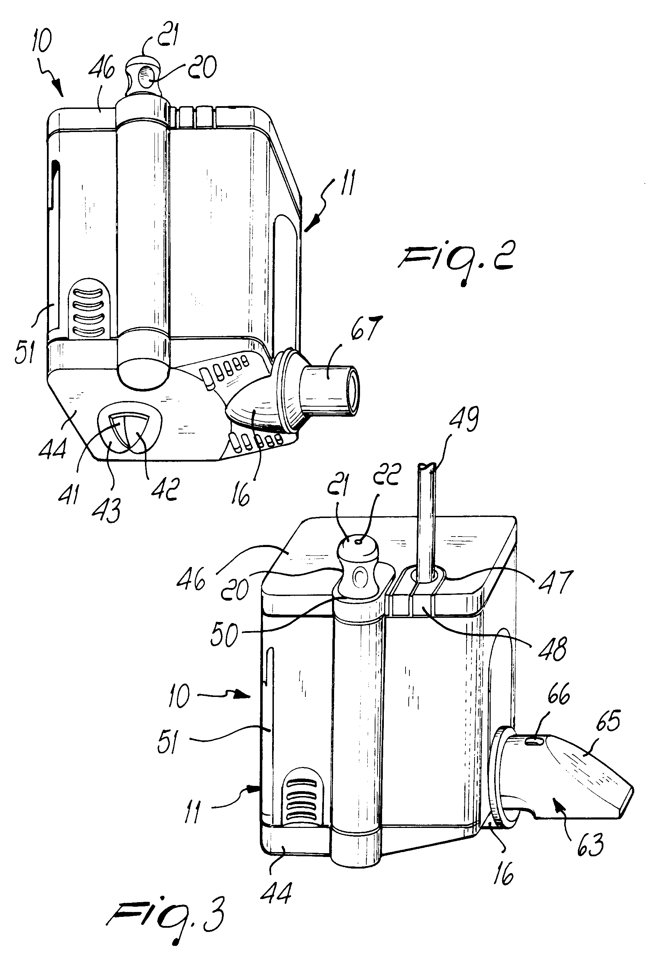

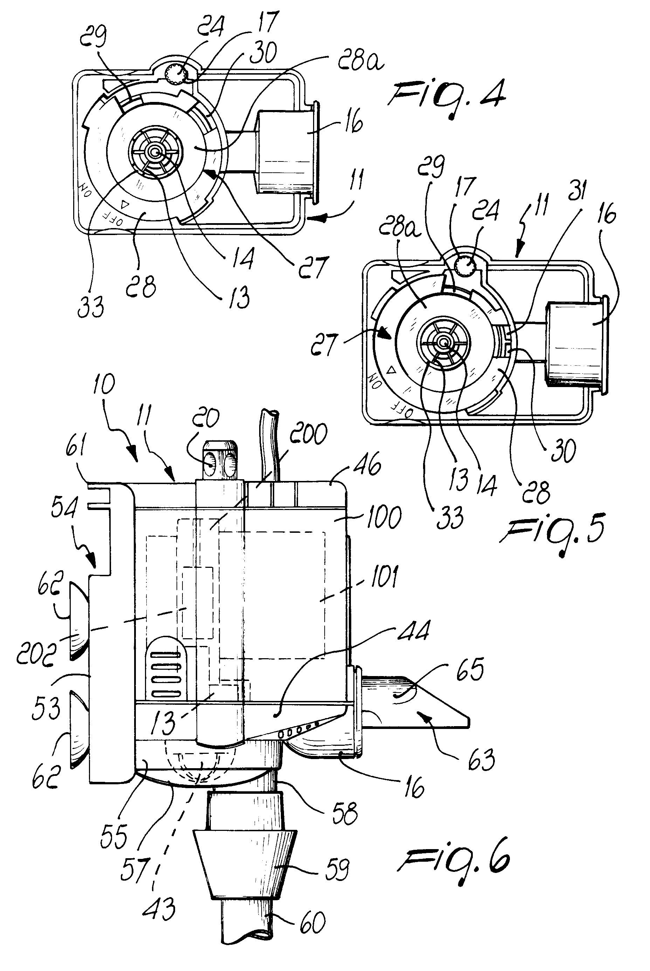

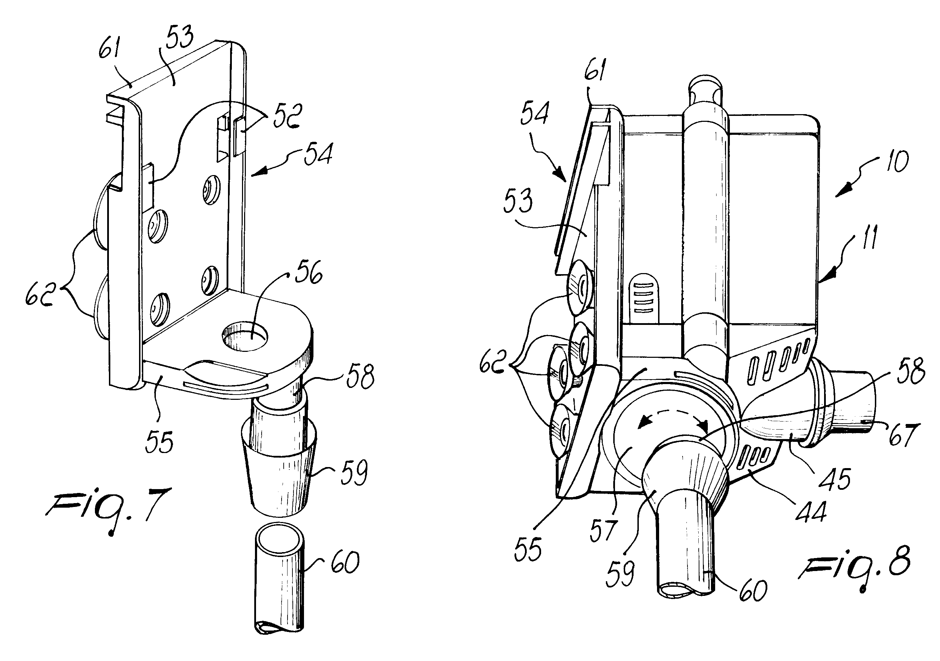

With reference to figures 1 to 8, a centrifugal pump according to the invention is generally designated by the reference numeral 10.

The centrifugal pump 10 comprises a box-like body 11 that is substantially shaped like a parallelepiped and inside which two hermetically mutually separated chambers are formed; a first chamber 100 accommodates a stator 101 of a permanent-magnet electric motor, and a second chamber 200 accommodates the rotor 202 of said motor (also not shown in the figures).

The box-like body 11 has a third chamber 12 which accommodates an impeller 13 coaxially connected to the above mentioned rotor and rotating therewith about a shaft 14.

The third chamber 12 is connected to the outside by means of an intake duct 15 that is made up of, as better described hereinafter, a plurality of elements, and a delivery duct 16.

In the box-like body 11, at a region that is close to the edge and in a longitudinal direction that is substantially parallel to the shaft 14, a substantially cylindrical seat 17 is provided, inside which a first tubular element 18, longer than said seat, is rotatably accommodated.

In particular, the first tubular element 18 has a first end protruding from the box-like body 11 and shaped so as to form a knob 20 that is perforated and closed at its free end by a plug 21 with an axial through hole 22.

A second end 23 of the first tubular element 18 is shaped so as to form a gear 24 which is arranged, upon assembly, inside the third chamber 12 in a peripheral region.

The first tubular element 18 has a diameter that is slightly smaller than the diameter of the seat 17 and is fixed to said seat by means of an annular raised portion 25.

Air passage holes 26 are also formed at the lateral surface of the first tubular element 18 and connect the inside of the first tubular element 18 to the interspace (not shown in the figures) that is formed by said tubular element 18 and the seat 17.

In this manner, the first tubular element 18 constitutes a first segment of an air intake duct that connects the outside of the centrifugal pump 10, in this particular case, to the third chamber 12.

The third chamber 12 detachably accommodates, with a bayonet-type coupling, a manifold 27 provided with a flanged part 28 having an axial hole and a surface that lies opposite to the impeller 13 upon assembly and is shaped so as to form a circular channel 28a connected to two openings 29 and 30 formed at the edge of said surface.

In particular, once the manifold 27 has been fixed to the central body 11 at the third chamber 12, the opening 29 is located at the gear 24, whereas the opening 30 is arranged at an opening 31 connected to the delivery duct 16.

The manifold 27 is, upon assembly, coaxial to the impeller 13, and a third tubular element 33 protrudes from the flanged part 28, again coaxially to said impeller 13 and opposite thereto.

A shaped element 34 is rotatably accommodated inside the third chamber 12 and is constituted by a shaped flanged element 35 having a toothed edge portion 36 meshing with the gear 24.

The flanged element 35 has, at a surface facing the manifold 27, a recess 37 that forms a first portion of the second segment of the air duct, the second portion being provided by the channel 32 and by the openings 29, 30, and 31.

The flanged element 35 also has, at the surface lying opposite to the impeller 13, stroke-limiting raised portions that are not shown in the figures.

The air duct is also formed by a laminar raised portion 38 forming a circular arc that is concentric to the axis of the flanged element 35 and couples to the channel 32 upon assembly.

The flanged element 35 has an axial hole 39, whereat a second tubular element 40 extends in the opposite direction with respect to the impeller 13; said second tubular element is rotatably coupled to the third tubular element 33 upon assembly.

A first hemispherical dome 41 is located at the free end of the second tubular element 40 and has two substantially triangular and mutually opposite holes 42.

The first dome 41 rotatably couples to a complementarily shaped second dome 43 formed in a lid 44 that is detachably associated with the box-like body 11 at the surface thereof related to the impeller 13.

A shaped portion 45 is also formed in the lid 44 and couples to the delivery duct 16.

The second duct 43, the first duct 41, the second tubular element 40, and the third tubular element 33 constitute, all together, the intake duct 15.

The box-like body 11 also comprises a detachable lid 46 at its surface that lies opposite to the surface related to the impeller 13.

The lid 46 allows access to the electric motor of the centrifugal pump 10, which is in any case embedded in resin.

The lid 46 furthermore has an edge portion 47 shaped so as to accommodate the coupling 48 for a power supply cable 49 for the electric motor.

Furthermore, a hole 50 is formed in the lid 46, and the first tubular element 18 passes therein.

Two slots 51 are formed at the edges related to the side of the box-like body that lies opposite to the delivery duct 16; said slots mate with corresponding tabs 52 formed at the edges of a back 53 of a bracket-shaped support 54.

When the box-like body 11 is coupled to the bracket-like support 54, the lid 44 abuts against a support 55 that constitutes the bottom of the bracket-like support 54.

A flange 57 is rotatably accommodated inside the support 55, which has a hole 56 that accommodates the second dome 43 upon assembly; said flange 57 has an eccentric through hole (not shown in the figures), whereat a fourth tubular element 58 protrudes in opposition with respect to the surface on which the box-like body 11 abuts; said fourth tubular element is hydraulically connected to the hole 56.

The fourth tubular element 58 is inserted in a coupling 59 made of soft material that is connected to the intake tube 60 and is connectable to a filter with its other end.

The back 53 of the bracket-like support 54 has, at one of its upper edges, raised portions 61 adapted to engage the edge of the aquarium and has suckers 62 adapted to provide further anchoring to the surface of the aquarium.

Furthermore, it is possible to associate with the delivery duct of the centrifugal pump 10 a deflector element 63, which is constituted by a coupling region 64 that is partially cylindrical and monolithically associated with a flap 65 that causes the deflection, and has a hole 66 for discharging the air or, as an alternative, a cylindrical connector 67.

In practice, operation is as follows: the user, by acting on the knob 20, causes the rotation of the first tubular element 18.

The rotation of the first tubular element 18 correspondingly causes the rotation of the gear 24, which is coupled to the edge portion 36.

Therefore, the rotations of the gear 24 induce corresponding rotations of the shaped element 34.

The shaped element 34, when moved into a given position by the rotation of the gear 24, forms the second segment of the air intake duct, since the recess 37 coincides with the opening 29.

In this case, the air, by passing through the first tubular element 18 and entering the channel formed by the shaped element 34 and by the manifold 27, can in fact exit into the delivery duct 16.

In all other positions, since the recess 37 and the opening 29 are offset, the air cannot enter the delivery duct 16.

It should be noted that air aspiration occurs by virtue of the Venturi effect in this centrifugal pump 10 as well.

Actually, a Venturi effect is always active, except that instead of drawing air from the tubular element 18 it draws water from the intake duct 15 and vice versa.

As regards the hydraulic operation of the centrifugal pump, it does not differ substantially from that of conventional types.

It is also stressed that the rotation of the flange 57 allows to adapt the coupling of the centrifugal pump 10 to an optional duct for connection to an undergravel filter.

In this particular case, the air is aspirated when throttling of the water intake is nil, that is to say, when there is full delivery, but this does not rule out the provision of different combinations in other cases.

The fact should also be stressed that the maintenance of the pump 10 is particularly practical, since said pump can be completely removed from the support 54 in a simple manner, leaving said support anchored to the glass of the aquarium (by means of the suckers 62) and to the optional undergravel filter.

In practice, it has been observed that the intended aim and objects have been achieved; in particular, it should be noted that the user, by simply actuating a single element, can adjust both water intake and air oxygenation, and this avoids the presence of specific aeration devices or even auxiliary air intake tubes.

In this case, the air is in fact drawn from a tubular element that is fully integrated inside the centrifugal pump.

Furthermore, this embodiment allows a considerable number of combinations between the air intake flow and the water intake flow.

It should also be noted that said pump is also adaptable in terms of position of the aspiration tube.

Finally, it should be noted that the aesthetic result is appreciable in terms of compact size and limitation of appendages and external pipes.

The present invention is susceptible of numerous modifications and variations, all of which are within the scope of the inventive concept.

All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Centrifugal pump with permanent-magnet motor, comprising a box-like body inside which two hermetically mutually separated chambers are formed, a first one of said chambers accommodating a stator of a permanent-magnet electric motor, a second one of said chambers accommodating the rotor of said motor, said box-like body having a third chamber connected to the second chamber and accommodating an impeller that is coaxially connected to said rotor and is connected to the outside by means of an intake duct and a delivery duct, said pump being characterized in that it comprises water oxygenation devices constituted by a first tubular element, which is rotatably accommodated in a seat formed in said box-like body and has a first end which is actuatable by a user, and a second end that kinematically actuates first air-passage throttling means, said first tubular element forming a first air duct segment that connects the outside to said delivery duct.

2. Centrifugal pump according to claim 1, characterized in that said first tubular element is kinematically connected to, and actuates, second means for throttling said intake duct.

3. Centrifugal pump according to claims 1 and 2, characterized in that the mechanism constituted by said first tubular element, said first throttling means, and said second throttling means transmits movement of said first throttling means to a corresponding state that is proximate to, and/or coincides with, a state of full intake of said second throttling means, or to an interval between said proximate state and said coincident state.

4. Centrifugal pump according to claim 1, characterized in that said second end of said first tubular element is shaped so as to form a gear.

5. Centrifugal pump according to one or more of the preceding claims, characterized in that said first throttling means and said second throttling means comprise a shaped element constituted by: a flanged element, which is also shaped and provided with an axial hole, its edge being at least partially toothed and meshing with said gear, a first portion of the second segment of said air duct being formed on the surface of said flanged element that faces said impeller; and by a second tubular element, which protrudes axially from said flanged element and has, at its free end, a first dome, on which one or more holes are formed, said first dome being rotatably coupled, upon assembly, to a complementarily shaped second dome that also has one or more holes and is formed in a lid that is detachably or rigidly associated with said box-like body.

6. Centrifugal pump according to one or more of the preceding claims, characterized in that said shaped element is rotatably accommodated in said third chamber coaxially to said impeller.

7. Centrifugal pump according to one or more of the preceding claims, characterized in that it comprises a manifold that is detachably or non-detachably accommodated in said third chamber between said shaped element and said impeller, coaxially to said impeller, said manifold having a flanged part having an axial hole and a surface that faces said shaped element and is shaped so as to form a second completion portion for said second segment of said one air duct and a third axial tubular element that is connected to the hole of said flanged part and is rotatably coupled, upon assembly, to said second tubular element.

8. Centrifugal pump according to one or more of the preceding claims, characterized in that said second segment of said air duct connects said first segment to said delivery duct, the region of said second segment that leads into said delivery duct being open at the corresponding regions of the first and second portions, said corresponding regions coinciding with each other at a given mutual position of said gear and of said at least partially toothed edge, wherein said one or more holes of said first dome and said one or more holes of said second dome furthermore coincide.

9. Centrifugal pump according to one or more of the preceding claims, characterized in that said shaped element has stroke limiting means.

10. Centrifugal pump according to one or more of the preceding claims, characterized in that said stroke limiting means are constituted by raised portions protruding from said flanged element.

11. Centrifugal pump according to one or more of the preceding claims, characterized in that said manifold is detachably fixed to said box-like body by virtue of a bayonet-type coupling provided by its flanged part.

12. Centrifugal pump according to one or more of the preceding claims, characterized in that said first tubular element has a diameter that is smaller than said seat and has one or more lateral holes for the passage of the air from its inside to the interspace formed by said first tubular element and by said seat and is connected to said first portion of the second segment of said air duct.

13. Centrifugal pump according to claim 12, characterized in that adapter means comprise a flange that is rotatably coupled to a support, said support having a hole that is connected, upon assembly, to the intake duct, said flange having a fourth eccentric tubular element.

14. Centrifugal pump according to claim 13, characterized in that said support is part of a bracket-shaped support for said centrifugal pump.

15. Centrifugal pump according to one or more of the preceding claims, characterized in that it is fixed, by mating on corresponding tabs that protrude from said bracket-like support, by means of slots formed in said box-like body.

16. Centrifugal pump according to one or more of the preceding claims, characterized in that said bracket-like support has one or more suckers for fixing to the wall of the aquarium.

17. Centrifugal pump according to one or more of the preceding claims, characterized in that said first end of said first tubular element protrudes from said box-like body and is shaped so as to form a knob with a perforated head.

18. Centrifugal pump according to one or more of the preceding claims, characterized in that it comprises a deflector element constituted by a region for coupling to the delivery duct that is partially cylindrical and monolithic with a flap having an air vent hole.

19. Centrifugal pump according to one or more of the preceding claims, characterized in that it comprises a cylindrical connector that is associable with said delivery duct.
